# EUROPÄISCHE PATENTSCHRIFT

(11) **EP 3 142 334 B1**
(45) Veröffentlichungstag und Bekanntmachung des Hinweises auf die Patenterteilung: **06.11.2019**
(21) Anmeldenummer: 15184867.8
(22) Anmeldetag: 11.09.2015
(51) Int. Cl.: H04L 29/08, H04L 29/12, H04L 29/06, H04L 12/24

(54) **VERFAHREN ZUM BETRIEB VON KOMMUNIKATIONSGERÄTEN INNERHALB EINES INDUSTRIELLEN AUTOMATISIERUNGSSYSTEMS**
METHOD FOR OPERATING COMMUNICATION DEVICES WITHIN AN INDUSTRIAL AUTOMATION SYSTEM
PROCÉDÉ DE FONCTIONNEMENT D'APPAREILS DE COMMUNICATION AU SEIN D'UN SYSTÈME D'AUTOMATISATION INDUSTRIEL

(43) Veröffentlichungstag der Anmeldung: 15.03.2017
(73) Patentinhaber: Siemens Aktiengesellschaft, 80333 München (DE)
(72) Erfinder: Albrecht, Harald, 90475 Nürnberg (DE); Landgraf, Ingo, 90765 Fürth-Poppenreuth (DE)

(56) Entgegenhaltungen:
- STEFFANN S J M STEFFANN CONSULTANCY I VAN BEIJNUM INSTITUTE IMDEA NETWORKS R VAN REIN OPENFORTRESS S: "A Comparison of IPv6-over-IPv4 Tunnel Mechanisms; rfc7059.txt", A COMPARISON OF IPV6-OVER-IPV4 TUNNEL MECHANISMS; RFC7059.TXT, INTERNET ENGINEERING TASK FORCE, IETF; STANDARD, INTERNET SOCIETY (ISOC) 4, RUE DES FALAISES CH- 1205 GENEVA, SWITZERLAND, 27. November 2013 (2013-11-27), Seiten 1-41, XP015094903, [gefunden am 2013-11-27]
- TEMPLIN BOEING PHANTOM WORKS T GLEESON CISCO SYSTEMS K K D THALER MICROSOFT CORPORATION F: "Intra-Site Automatic Tunnel Addressing Protocol (ISATAP); rfc5214.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. März 2008 (2008-03-01), XP015055257, ISSN: 0000-0003
- YUAN ZHOU ET AL: "Research on the security mechanism for interconnection between PROFIBUS and Internet", PROCEEDING OF THE 11TH WORLD CONGRESS ON INTELLIGENT CONTROL AND AUTOMATION, IEEE, 29. Juni 2014 (2014-06-29), Seiten 5972-5976, XP032743069, DOI: 10.1109/WCICA.2014.7053743 [gefunden am 2015-03-02]
- Anonymous: "IPv6 in der Automatisierungstechnik - White Paper", , 1. Februar 2013 (2013-02-01), Seiten 1-13, XP055140595, Gefunden im Internet: URL:http://www.siemens.com/press/pool/de/m aterials/industry/iia/whitepapers/whitepap er-ipv6-d.pdf [gefunden am 2014-09-16]
- HINDEN NOKIA S DEERING CISCO SYSTEMS R: "IP Version 6 Addressing Architecture; rfc4291.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Februar 2006 (2006-02-01), XP015054931, ISSN: 0000-0003

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Die ältere europäische Patentanmeldung EP 3 059 930 A1 betrifft ein Verfahren zur Konfiguration eines Kommunikationsgeräts eines industriellen Automatisierungssystems, bei dem das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit einem gültigen Präfix überprüft. Das Kommunikationsgerät ordnet sich nur die beim Server des Namensdienst-Systems abgefragten Kommunikationsnetzadressen zu, die eine Übereinstimmung mit einem mittels Router Advertisement übermittelten Präfix aufweisen.

In der älteren europäischen Patentanmeldung EP 3 062 490 A1 ist ein Verfahren zur Datenübermittlung innerhalb eines industriellen Automatisierungssystems beschrieben, das zumindest ein Teilnetz mit einer Gruppe von Kommunikationsgeräten und einem Teilnetz-Steuerungsgerät umfasst. Dabei erfasst eine dem Teilnetz-Steuerungsgerät zugeordnete Namens- oder Konfigurationsdienstkomponente für die Gruppe von Kommunikationsgeräten IPv4-Adressen und zugeordnete Gerätenamen. Für die Gruppe von Kommunikationsgeräten wird aus einem dem Teilnetz zugeordneten IPv6-Präfix und den IPv4-Adressen der Kommunikationsgeräte jeweils eine IPv6-Adresse berechnet. Aus den IPv4-Adressen der Kommunikationsgeräte und den berechneten IPv6-Adressen werden Adressumsetzungsregeln ermittelt, die durch eine dem Teilnetz-Steuerungsgerät zugeordnete Adressumsetzungseinheit für eine Adressumsetzung zwischen IPv4-Adressen und IPv6-Adressen angewendet werden. Die berechneten IPv6-Adressen und die zugeordneten Gerätenamen werden in einem übergeordneten Namensdienst-Server gespeichert.

In heterogenen industriellen Automatisierungssystemen mit IP-basierten Teilnetzen und PROFIBUS-basierten Teilnetzen, in denen deutliche unterschiedliche Vermittlungs- und Sicherungsschichtprotokolle verwendet werden, kann durch überlagerte Automatisierungsnetz-Routing-Verfahren unter Nutzung von Automatisierungssystemadressen ein systemweiter Nachrichtenaustausch realisiert werden. Somit kann bestehende PROFIBUS-Netzinfrastruktur weitergenutzt werden. Andererseits sollen industrielle Automatisierungssysteme zunehmend auch auf Basis von IPv6 betrieben werden können. IPv6 steht dabei grundsätzlich einer vollständigen Adressplanung entgegen, da IPv6-Adressen aufgrund Client-seitiger Selbstkonfiguration vorab gar nicht mehr bekannt sind.

In "IPv6 in der Automatisierungstechnik", White Paper V1.0, Siemens AG sind Grundlagen und automatisierungstechnische Anforderungen zu IPv6-gestützter Kommunikation zusammengefasst. Insbesondere wird in diesem White Paper auf einschlägige Standards zu IPv6 verwiesen, nämlich IETF RFC 2460, RFC 3315 (Dynamic Host Configuration Protocol for IPv6), RFC 4291 (IP Version 6 Addressing Architecture), RFC 4294 (IPv6 Node Requirements), RFC 4862 (IPv6 Stateless Address Autoconfiguration), RFC 4861 (Neighbor Discovery for IP version 6). Darüber hinaus ist als Anwendungsbeispiel ein OPC Server (Open Process Control) beschrieben, der eine Rolle eines Proxy übernimmt, der einen Zugriff auf Automatisierungsdaten über IPv4 und IPv6 ermöglicht. Damit können OPC Clients, unabhängig davon, ob sie einen IPv4- oder einen IPv6-Stack implementieren, auf angeforderte Informationen aus einer Automatisierungsanlage zugreifen.

Der vorliegenden Erfindung liegt die Aufgabe zugrunde, ein Verfahren zum Betrieb von Kommunikationsgeräten innerhalb eines industriellen Automatisierungssystems zu schaffen, das eine zuverlässige und einfache Integration von IPv6-basierten Kommunikationsgeräten in eine heterogene Netzumgebung mit unterschiedlichen Vermittlungs- und Sicherungsschichtprotokollen ermöglicht.

Diese Aufgabe wird erfindungsgemäß durch ein Verfahren mit den in Anspruch 1 angegebenen Merkmalen gelöst. Vorteilhafte Weiterbildungen der vorliegenden Erfindung sind in den abhängigen Patentansprüchen angegeben.

Das erfindungsgemäße Verfahren ist zum Betrieb von Kommunikationsgeräten innerhalb eines industriellen Automatisierungssystems vorgesehen, das zumindest ein PROFIBUS-basiertes Teilnetz und zumindest ein IP-basiertes Teilnetz umfasst, die jeweils wiederum Kommunikationsgeräte umfassen. Im IP-basierten Teilnetz werden Daten auf Vermittlungs- und Transportebene entsprechend TCP/IP übermittelt. Dagegen werden Daten im PROFIBUS-basierten Teilnetz auf Transportebene entsprechend Automatisierungssystem-Transportprotokoll übermittelt. Das erfindungsgemäße Verfahren umfasst ein Zuordnen von IPv4-Adressen an die Kommunikationsgeräte im IP-basierten Teilnetz sowie ein Zuordnen von PROFIBUS-Adressen an die Kommunikationsgeräte PROFIBUS-basierten Teilnetz. Außerdem umfasst das Verfahren ein zusätzliches, Vermittlungs- bzw. Sicherungsschichtprotokoll-übergreifendes Zuordnen von Automatisierungssystemadressen, wobei die Automatisierungssystemadressen jeweils einen Teilnetz-Identifikator (z.B. Automatisierungssystem-Subnetz-Identität) und eine Vermittlungs- bzw. Sicherungsschichtprotokoll-abhängige Stationsadresse (z.B. Automatisierungssystem-Stationsadresse) umfassen. Die Stationsadresse ist bei Kommunikationsgeräten im IP-basierten Teilnetz jeweils deren IPv4-Adresse und bei Kommunikationsgeräten im PROFIBUS-basierten Teilnetz jeweils deren PROFIBUS-Adresse.

Darüber hinaus umfasst das erfindungsgemäße Verfahren ein Erzeugen von Link-lokalen IPv6-Adressen für IPv6-basierte Kommunikationsgeräte und deren Koppeln an eine jeweilige IPv4-Stationsadresse. Dabei werden die Link-lokalen IPv6-Adressen aus den Automatisierungssystemadressen Link-lokale IPv6-Adressen erzeugt. Den die Link-lokalen IPv6-Adressen wird ein reservierter Adressbereich außerhalb eines Adressbereichs für auf Basis von MAC-Adressen erzeugte Link-lokale IPv6-Adressen zugeordnet. Aus der jeweiligen IPv4-Stationsadresse der Kommunikationsgeräte werden Schnittstellenidentifikatoren (z.B. Interface Identifier) der Link-lokalen IPv6-Adressen gebildet. Als IPv6-Präfix für die aus den Automatisierungssystemadressen erzeugten Link-lokalen IPv6-Adressen wird ein Automatisierungssysteme kennzeichnendes Präfix verwendet (z.B. fe80::77:0:0/64). Ein Routing von Nachrichten zwischen Kommunikationsgeräten innerhalb des industriellen Automatisierungssystems erfolgt anhand der Automatisierungssystemadressen überlagert zu einem teilnetzabhängigen Vermittlungs- bzw. Sicherungsschichtprotokoll. Auf diese Weise können beispielsweise PROFIBUS-basierte Automatisierungsnetze ohne zusätzliche Adressplanung um reine IPv6-Teilnetze erweitert werden.

Erfindungsgemäß werden beim Routing der Nachrichten zwischen den Kommunikationsgeräten, insbesondere beim Routing über Automatisierungssystem-Verbindungen, Hop-weise entsprechend einem unterlagerten Sicherungsschichtprotokoll aufgebaute Verbindungen geschaltet und miteinander verbunden. Außerdem wird beim Routing der Nachrichten zwischen den Kommunikationsgeräten die jeweilige IPv4-Stationsadresse für die IPv6-basierten Kommunikationsgeräte direkt aus dem Schnittstellenidentifikator der jeweiligen Link-lokalen IPv6-Adresse entnommen.

Entsprechend einer bevorzugten Ausgestaltung der vorliegenden Erfindung sendet ein erstes Kommunikationsgerät in einer Anforderung eines Verbindungsaufbaus zu einem mehrere Hops entfernten zweiten Kommunikationsgerät lediglich die Automatisierungssystemadresse des zweiten Kommunikationsgeräts an einen dem ersten Kommunikationsgerät zugeordneten ersten Router. In diesem Fall ergänzt der erste Router die Automatisierungssystemadresse des ersten Kommunikationsgeräts in der Anforderung anhand einer Sicherungsschicht-Quell-Adresse des ersten Kommunikationsgeräts und leitet diese mittelbar oder unmittelbar an einen dem zweiten Kommunikationsgerät zugeordneten zweiten Router weiter. Darüber hinaus kann der erste Router bei einem IPv6-basierten ersten Kommunikationsgerät anhand der Sicherungsschicht-Quell-Adresse des ersten Kommunikationsgeräts die Link-lokale IPv6-Adresse des ersten Kommunikationsgeräts ermitteln und aus ihrem Schnittstellenidentifikator die Stationsadresse des ersten Kommunikationsgeräts entnehmen. Dabei verwendet der erste Router als Teilnetz-Identifikator für die Automatisierungssystemadresse des ersten Kommunikationsgeräts den Teilnetz-Identifikator seiner eigenen Automatisierungssystemadresse. Somit kann beispielsweise ein involvierter Router eine vollständige Automatisierungssystem-Quelladresse aus lediglich einer Stationsadresse regenerieren.

Des weiteren kann entsprechend einer weiteren Ausgestaltung der vorliegenden Erfindung vorgesehen sein, dass pro Teilnetz des industriellen Automatisierungssystems Stationsadressen von Kommunikationsgeräten festgelegt werden, für die Transportschicht-Verbindungen IPv6-basiert aufgebaut werden. Beispielsweise können die Stationsadressen von Kommunikationsgeräten, für die Transportschicht-Verbindungen IPv6-basiert aufgebaut werden, mittels eines Projektierungssystems des industriellen Automatisierungssystems festgelegt.

Die Kommunikationsgeräte können anhand ihrer Automatisierungssystemadressen beispielsweise durch ein Projektierungs- bzw. Engineeringsystem des industriellen Automatisierungssystems identifizierbar sein. Insbesondere können die IPv4-Stationsadressen der IPv6-basierten Kommunikationsgeräte vorteilhafterweise mittels eines Projektierungssystems des industriellen Automatisierungssystems festgelegt werden.

Die vorliegende Erfindung wird nachfolgend an einem Ausführungsbeispiel anhand der Zeichnung näher erläutert. Es zeigt
- Figur 1: ein industrielles Automatisierungssystem mit PROFIBUS-basierten Teilnetzen und IP-basierten Teilnetzen,
- Figur 2: eine schematische Darstellung einer Kopplung zwischen Stationsadressen innerhalb des industriellen Automatisierungssystems und IPv6-Adressen für IPv6-basierte Kommunikationsgeräte.

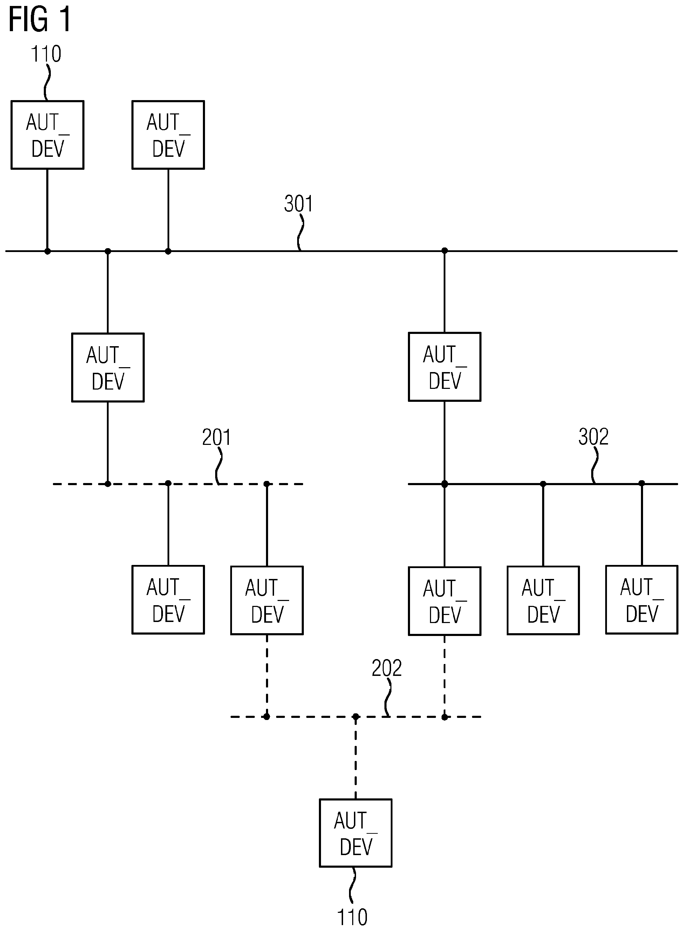

In Figur 1 ist ein industrielles Automatisierungssystem mit einer heterogenen Kommunikationsnetzstruktur dargestellt, die mehrere PROFIBUS-basierte Teilnetze 201-202 und mehrere IPbasierte Teilnetze 301-302 umfasst. Jedes der Teilnetze 201-202, 301-302 umfasst eine Vielzahl von Automatisierungsgeräten 110, beispielsweise speicherprogrammierbare Steuerungen. In den IP-basierten Teilnetzen 301-302 werden Daten auf Vermittlungs- und Transportebene entsprechend TCP/IP (Transmission Control Protocol/Internet Protocol) übermittelt. Dagegen werden Daten in den PROFIBUS-basierten Teilnetzen 201-202 auf Transportebene entsprechend Automatisierungssystem-Transportprotokoll übermittelt, das ein Automatisierungssystem-spezifisches Transportschichtprotokoll darstellt. Grundsätzlich könnten beispielsweise auch PROFINET-basierte Teilnetze vorgesehen sein.

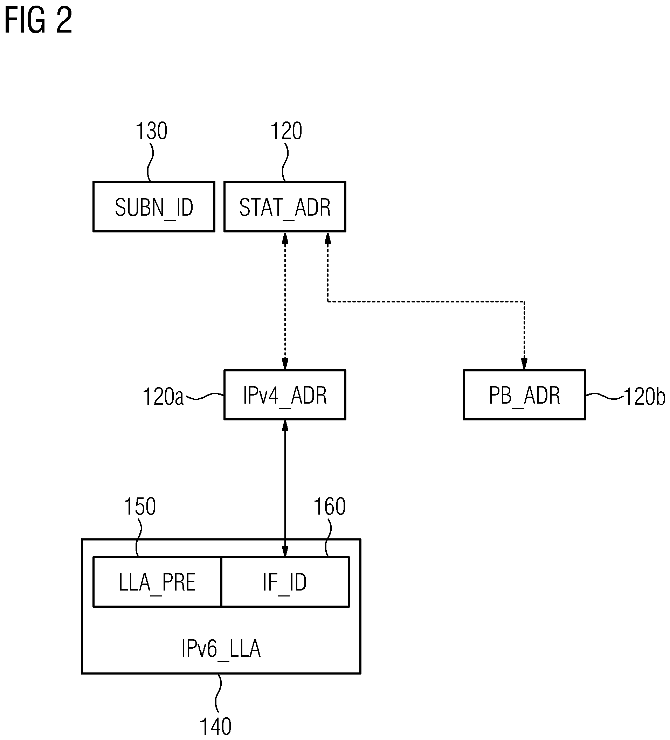

Die PROFIBUS-basierten Teilnetze 201-202 einerseits und die IP-basierten Teilnetze 301-302 andererseits werden mittels Routing über Automatisierungssystem-Verbindungen in Verbindung mit teilnetzübergreifend genutzten Automatisierungssystemadressen zu einem durchgängigen Automatisierungsnetz verbunden. Entsprechend der Darstellung in Figur 2 umfassen die Automatisierungssystemadressen jeweils eine Subnetz-ID 130 sowie eine Stationsadresse 120. Anstatt für IPv6-basierte Kommunikationsgeräte IPv6-Adressen neben IPv4-Stationsadressen 120a und PROFIBUS-Stationsadressen 120b als dritten unterlagerten Adresstyp einzuführen, werden IPv6-Adressen als unterlagerte Detailinformationen 140 zu IPv4-Stationsadressen behandelt. Die IPv6-Adressen werden als Link-lokale IPv6-Adressen (LLA) erzeugt und starr an die Stationsadressen 120 gekoppelt. Durch eine starre Kopplung wird insbesondere ein Reverse Lookup einer IPv6-Adresse während eines Aufbaus einer Automatisierungssystem-Verbindung vermieden.

Entsprechend vorliegendem Ausführungsbeispiel wird gezielt ausgenutzt, dass IPv6-Stacks für einen Betrieb mit mehreren IPv6-Adressen pro IPv6-Interface ausgelegt sind. Insbesondere können IPv6-Adressen dabei aus unterschiedlichen Quellen stammen. Neben Link-lokalen IPv6-Adressen, die standardkonform aus MAC-Adressen von Ethernet-Schnittstellen gebildet werden, sind für IPv6-basierte Kommunikationsgeräte entsprechend dem vorliegenden Ausführungsbeispiel oben genannte Automatisierungssystem-spezifische Link-lokale IPv6-Adressen vorgesehen. Diesen Automatisierungssystem-spezifischen Link-lokalen IPv6-Adressen ist reservierter Adressbereich außerhalb eines Bereichs für aus MAC-Adressen gebildete Link-lokale IPv6-Adressen zugeordnet.

Als IPv6-Präfix 150 für die Automatisierungssystem-spezifischen Link-lokalen IPv6-Adressen wird ein Automatisierungssysteme kennzeichnendes Präfix verwendet. Schnittstellenidentifikatoren 160 für die Automatisierungssystem-spezifischen Link-lokalen IPv6-Adressen werden aus IPv4-Stationsadressen der jeweiligen Kommunikationsgeräte gebildet. Im vorliegenden Ausführungsbeispiel weisen die Automatisierungssystem-spezifischen Link-lokalen IPv6-Adressen folgende Form auf: fe80::77:0:0, wobei 32 Bit für die jeweilige IPv4-Stationsadresse vorgesehen sind. Durch das IPv6-Präfix fe80::77:0:0/96 wird eine Wahrscheinlichkeit einer Kollision mit manuell oder per DHCPv6 vergebenen Link-lokalen IPv6-Adressen minimiert sowie eine Kollision mit aus MAC-Adressen erzeugten Link-lokalen IPv6-Adressen vermieden. Somit kommt es zu keiner Überschneidung mit aus MAC-48-Adressen erzeugten Link-lokalen IPv6-Adressen. Aufgrund beschriebener Bildung sind die Automatisierungssystem-spezifischen Link-lokalen IPv6-Adressen im Rahmen von Diagnosevorgängen einfach zu erkennen und dementsprechend zu filtern.

Aufgrund des im vorliegenden Ausführungsbeispiel verwendeten Routing über Automatisierungssystem-Verbindungen bedeutet eine Verwendung Link-lokaler IPv6-Adressen für IPv6-basierte Kommunikationsgeräte keinerlei Einschränkung. Insbesondere erfolgt ein Aufbau von Automatisierungssystem-Verbindungen auf Basis der jeweiligen Automatisierungssystemadressen. Damit ist eine reibungslose parallele Nutzung von selbstkonfigurierendem IPv6-Routing und überlagertem Routing über Automatisierungssystem-Verbindungen gewährleistet.

Bei einem Aufbau von Automatisierungssystem-Verbindungen werden die jeweiligen Automatisierungssystemadressen nur auf einem Teilabschnitt einer Automatisierungssystem-Verbindung zwischen terminierenden Kommunikationsendgeräten übermittelt. Beim Routing über Automatisierungssystem-Verbindungen werden nämlich immer Hop-weise gesicherte Verbindungen auf Sicherungsschicht (OSI-Schicht 2) entsprechend TCP/IP oder PROFIBUS geschaltet und miteinander verbunden. Entsprechend dem vorliegenden Ausführungsbeispiel sendet ein erstes Kommunikationsendgerät in einer Anforderung eines Verbindungsaufbaus zu einem mehrere Hops entfernten zweiten Kommunikationsendgerät lediglich die Automatisierungssystemadresse des zweiten Kommunikationsendgeräts an einen dem ersten Kommunikationsendgerät zugeordneten ersten Router. Der erste Router ergänzt die Automatisierungssystemadresse des ersten Kommunikationsendgeräts in der Anforderung anhand einer Sicherungsschicht-Quell-Adresse des ersten Kommunikationsendgeräts und leitet diese mittelbar oder unmittelbar an einen dem zweiten Kommunikationsendgerät zugeordneten zweiten Router weiter.

Darüber hinaus ermittelt der erste Router bei einem IPv6-basierten ersten Kommunikationsendgerät anhand der Sicherungsschicht-Quell-Adresse des ersten Kommunikationsendgeräts die Link-lokale IPv6-Adresse des ersten Kommunikationsendgeräts und entnimmt aus ihrem Schnittstellenidentifikator die IPv4-Stationsadresse des ersten Kommunikationsendgeräts. Außerdem verwendet der erste Router als Subnetz-ID für die Automatisierungssystemadresse des ersten Kommunikationsendgeräts die Subnetz-ID seiner eigenen Automatisierungssystemadresse. Der zweite Router entfernt die Automatisierungssystemadresse des zweiten Kommunikationsendgeräts aus der Anforderung des Verbindungsaufbaus und leitet diese an das zweite Kommunikationsendgerät weiter. Aufgrund der starren Kopplung der Automatisierungssystem-spezifischen Link-lokalen IPv6-Adressen an die Stationsadressen ist im Rahmen des Routings über Automatisierungssystem-Verbindungen kein Reverse Lookup von IPv4-Stationsadressen erforderlich, da diese direkt aus dem Schnittstellenidentifikator der jeweiligen Link-lokalen IPv6-Adresse entnommen werden können.

Auch bei einem Mischbetrieb von IPv4-basierten Kommunikationsgeräten und IPv6-basierten Kommunikationsgeräten im selben Teilnetz sind für eine Automatisierungssystem-Kommunikation in einem Automatisierungsnetz lediglich IPv4-Stationsdressen 120a und PROFIBUS-Stationsadressen 120b relevant. Für bestehende Software hat ein Umstieg auf IPv6-basierte Teilnetze damit keine Auswirkung. Eine Integration von IPv6 kann beispielsweise unterhalb bisheriger Automatisierungssystem-Transport-Schnittstellen erfolgen.

Um einen schrittweisen Umstieg von IPv4 auf IPv6 für einzelne Geräte zu ermöglichen, werden vorteilhafterweise pro Teilnetz jeweils diejenigen IPv4-Stationsadressen spezifiziert, mit denen Automatisierungssystem-Transportverbindungen über IPv6 abgewickelt werden können. Nur für diese IPv4-Stationsadressen wird auf TCP über IPv6 umgeschaltet. Eine Liste von für IPv6 freigegebenen IPv4-Stationsadressen kann beispielweise mittels eines Engineering-Systems auf Grundlage von Metawissen über eingesetzte Geräte und deren Software-Konfiguration generiert werden. Alternativ dazu können diese Listen eigenständig bei Gerätebetrieb nachgeführt werden, indem bei einem Verbindungsaufbau Informationen zu IPv6-Funktionalitäten von Kommunikationspartnern abgefragt werden. Dies kann beispielsweise per DCP (Dynamic Configuration Protocol) oder in Analogie zu Router Advertisements per Station Advertisements erfolgen.

## Patentansprüche

1. Verfahren zum Betrieb von Kommunikationsgeräten innerhalb eines industriellen Automatisierungssystems,
- wobei das industrielle Automatisierungssystem zumindest ein PROFIBUS-basiertes Teilnetz (201, 202) und zumindest ein IP-basiertes Teilnetz (301, 302) umfasst,
- wobei Daten im IP-basierten Teilnetz (301, 302) auf Vermittlungs- und Transportebene entsprechend TCP/IP übermittelt werden,
- wobei Daten im PROFIBUS-basierten Teilnetz (201, 202) auf Transportebene einem Automatisierungssystem-Transportprotokoll entsprechend übermittelt werden,
- wobei die Teilnetze (201-202; 301-302) Kommunikationsgeräte (110) umfassen,
- wobei das Verfahren folgende Schritte umfasst:
- Zuordnen von IPv4-Adressen (120a) an die Kommunikationsgeräte im IP-basierten Teilnetz (301, 302),
- Zuordnen von PROFIBUS-Adressen (120b) an die Kommunikationsgeräte PROFIBUS-basierten Teilnetz (201, 202),
- zusätzliches, Vermittlungs- und Sicherungsschichtprotokoll-übergreifendes Zuordnen von Automatisierungssystemadressen an die Kommunikationsgeräte (110), wobei die Automatisierungssystemadressen jeweils einen Teilnetz-Identifikator und eine Stationsadresse umfassen, wobei die Stationsadresse bei Kommunikationsgeräten im IP-basierten Teilnetz (301, 302) jeweils deren IPv4-Adresse (120a) und bei Kommunikationsgeräten im PROFIBUS-basierten Teilnetz (201, 202) jeweils deren PROFIBUS-Adresse (120b) ist,
- Erzeugen von Link-lokalen IPv6-Adressen (140) für IPv6-basierte Kommunikationsgeräte und Koppeln an eine jeweilige IPv4-Stationsadresse (120a), wobei
- die Link-lokalen IPv6-Adressen (140) aus den Automatisierungssystemadressen erzeugt werden,
- den Link-lokalen IPv6-Adressen (140) ein reservierter Adressbereich außerhalb eines Adressbereichs für auf Basis von MAC-Adressen erzeugte Link-lokale IPv6-Adressen zugeordnet wird,
- Schnittstellenidentifikatoren (160) der Link-lokalen IPv6-Adressen (140) aus der jeweiligen IPv4-Stationsadresse (120a) der Kommunikationsgeräte gebildet werden,
- als IPv6-Präfix (150) für die aus den Automatisierungssystemadressen erzeugten Link-lokalen IPv6-Adressen (140) ein Automatisierungssysteme kennzeichnendes Präfix verwendet wird,
- Routing von Nachrichten zwischen Kommunikationsgeräten innerhalb des industriellen Automatisierungssystems anhand der Automatisierungssystemadressen überlagert zu einem teilnetzabhängigen Vermittlungs- oder Sicherungsschichtprotokoll, wobei beim Routing der Nachrichten
- Hop-weise entsprechend einem unterlagerten Sicherungsschichtprotokoll aufgebaute Verbindungen geschaltet und miteinander verbunden werden,
- die jeweilige IPv4-Stationsadresse (120a) für die IPv6-basierten Kommunikationsgeräte direkt aus dem Schnittstellenidentifikator der jeweiligen Link-lokalen IPv6-Adresse entnommen wird.

2. Verfahren nach Anspruch 1,
bei dem ein erstes Kommunikationsgerät in einer Anforderung eines Verbindungsaufbaus zu einem mehrere Hops entfernten zweiten Kommunikationsgerät lediglich die Automatisierungssystemadresse des zweiten Kommunikationsgeräts an einen dem ersten Kommunikationsgerät zugeordneten ersten Router sendet, bei dem der erste Router die Automatisierungssystemadresse des ersten Kommunikationsgeräts in der Anforderung anhand einer Sicherungsschicht-Quell-Adresse des ersten Kommunikationsgeräts ergänzt und diese mittelbar oder unmittelbar an einen dem zweiten Kommunikationsgerät zugeordneten zweiten Router weiterleitet, bei dem der erste Router bei einem IPv6-basierten ersten Kommunikationsgerät anhand der Sicherungsschicht-Quell-Adresse des ersten Kommunikationsgeräts die Link-lokale IPv6-Adresse des ersten Kommunikationsgeräts ermittelt und aus ihrem Schnittstellenidentifikator die Stationsadresse des ersten Kommunikationsgeräts entnimmt und bei dem der erste Router als Teilnetz-Identifikator für die Automatisierungssystemadresse des ersten Kommunikationsgeräts den Teilnetz-Identifikator seiner eigenen Automatisierungssystemadresse verwendet.

3. Verfahren nach Anspruch 2,
bei dem pro Teilnetz des industriellen Automatisierungssystems Stationsadressen von Kommunikationsgeräten festgelegt werden, für die Transportschicht-Verbindungen IPv6-basiert aufgebaut werden.

4. Verfahren nach Anspruch 3,
bei dem die Stationsadressen von Kommunikationsgeräten, für die Transportschicht-Verbindungen IPv6-basiert aufgebaut werden, mittels eines Projektierungssystems des industriellen Automatisierungssystems festgelegt werden.

5. Verfahren nach einem Ansprüche 1 bis 4,
bei dem die Kommunikationsgeräte anhand ihrer Automatisierungssystemadressen durch ein Projektierungssystem des industriellen Automatisierungssystems identifizierbar sind.

6. Verfahren nach einem Ansprüche 1 bis 5,
bei dem die IPv4-Stationsadressen der IPv6-basierten Kommunikationsgeräte mittels eines Projektierungssystems des industriellen Automatisierungssystems festgelegt werden.

## Claims

1. Method for operating communication devices within an industrial automation system,
- wherein the industrial automation system comprises at least one PROFIBUS-based subnetwork (201, 202) and at least one IP-based subnetwork (301, 302),
- wherein data in the IP-based subnetwork (301, 302) are transmitted on the network and transport layers according to TCP/IP,
- wherein data in the PROFIBUS-based subnetwork (201, 202) are transmitted on the transport layer according to an automation system transport protocol,
- wherein the subnetworks (201-202; 301-302) comprise communication devices (110),
- wherein the method comprises the following steps of:
- assigning IPv4 addresses (120a) to the communication devices in the IP-based subnetwork (301, 302),
- assigning PROFIBUS addresses (120b) to the communication devices in the PROFIBUS-based subnetwork (201, 202),
- additionally assigning automation system addresses to the communication devices (110) in a manner encompassing the network and data link layer protocols, wherein the automation system addresses each comprise a subnetwork identifier and a station address, wherein the station address in the case of communication devices in the IP-based subnetwork (301, 302) is their IPv4 address (120a) in each case and the station address in the case of communication devices in the PROFIBUS-based subnetwork (201, 202) is their PROFIBUS address (120b) in each case,
- generating link-local IPv6 addresses (140) for IPv6-based communication devices and coupling them to a respective IPv4 station address (120a), wherein
- the link-local IPv6 addresses (140) are generated from the automation system addresses,
- a reserved address area outside an address area for link-local IPv6 addresses generated on the basis of MAC addresses is assigned to the link-local IPv6 addresses (140),
- interface identifiers (160) of the link-local IPv6 addresses (140) are formed from the respective IPv4 station address (120a) of the communication devices,
- a prefix identifying automation systems is used as the IPv6 prefix (150) for the link-local IPv6 addresses (140) generated from the automation system addresses,
- routing messages between communication devices within the industrial automation system on the basis of the automation system addresses on a higher level with respect to a subnetwork-dependent network or data link layer protocol, wherein, when routing the messages,
- connections set up in hops according to a lower-level data link layer protocol are switched and are connected to one another,
- the respective IPv4 station address (120a) for the IPv6-based communication devices is taken directly from the interface identifier of the respective link-local IPv6 address.

2. Method according to Claim 1,
in which a first communication device, in a request to set up a connection to a second communication device which is several hops away, transmits only the automation system address of the second communication device to a first router assigned to the first communication device, in which the first router adds the automation system address of the first communication device to the request on the basis of a data link layer source address of the first communication device and directly or indirectly forwards this to a second router assigned to the second communication device, in which the first router, in the case of an IPv6-based first communication device, determines the link-local IPv6 address of the first communication device on the basis of the data link layer source address of the first communication device and takes the station address of the first communication device from the interface identifier thereof, and in which the first router uses the subnetwork identifier of its own automation system address as the subnetwork identifier for the automation system address of the first communication device.

3. Method according to Claim 2,
in which station addresses of communication devices, for which transport layer connections are set up in an IPv6-based manner,
are determined for each subnetwork of the industrial automation system.

4. Method according to Claim 3,
in which the station addresses of communication devices, for which transport layer connections are set up in an IPv6-based manner, are determined by means of a project planning system of the industrial automation system.

5. Method according to one of Claims 1 to 4,
in which the communication devices can be identified by a project planning system of the industrial automation system on the basis of their automation system addresses.

6. Method according to one of Claims 1 to 5,
in which the IPv4 station addresses of the IPv6-based communication devices are determined using a project planning system of the industrial automation system.

## Revendications

1. Procédé pour faire fonctionner des appareils de communication au sein d'un système d'automatisation industriel,
- dans lequel le système d'automatisation industriel comprend au moins un réseau (201, 202) partiel reposant sur PROFIBUS et au moins un réseau (301, 302) partiel reposant sur IP,
- dans lequel on transmet, conformément à TCP/IP, des données du réseau (301, 302) partiel reposant sur IP à un plan de commutation et de transport,
- dans lequel on transmet des données du réseau (201, 202) partiel reposant sur PROFIBUS au plan de transport, conformément à un protocole de transport du système d'automatisation,
- dans lequel les réseaux (201-202 ; 301-302) partiels comprennent des appareils (110) de communication,
- dans lequel le procédé comprend les stades suivants :
- affectation d'adresses (120a) IPv4 aux appareils de communication du réseau (301, 302) partiel reposant sur IP,
- affectation d'adresses (120b) PROFIBUS aux appareils de communication du réseau (201, 202) partiel reposant sur PROFIBUS,
- affectation supplémentaire, empiétant sur le protocole à couches de commutation et de sécurisation d'adresses du système d'automatisation aux appareils (110) de communication, les adresses du système d'automatisation comprenant chacune un identifiant de réseau partiel et une adresse de station, l'adresse de station étant, pour des appareils de communication du réseau (301, 302) partiel reposant sur IP, respectivement, leur adresse IPv4 (120a) et, pour des appareils de communication du réseau (201, 202) partiel reposant sur PROFIBUS, respectivement, leur adresse (120b) PROFIBUS,
- production d'adresses IPv6 (140) local link pour des appareils de communication reposant sur IPv6 et couplage à une adresse (120a) de station IPv4 respective, dans lequel
- on produit les adresses IPv6 (140) local link à partir des adresses du système d'automatisation,
- on affecte aux adresses IPv6 (140) local link un domaine d'adresse réservé à l'extérieur d'un domaine d'adresse pour des adresses IPv6 local link produites sur la base d'adresses MAC,
- on forme des identifiants (160) d'interface des adresses IPv6 (140) local link à partir des adresses (120a) de station IPv4 respective des appareils de communication,
- on utilise comme préfixe IPv6 (150), pour les adresses IPv6 (140) local link produites à partir des adresses du système d'automatisation, un préfixe caractérisant le système d'automatisation,
- acheminement de messages entre des appareils de communication au sein du système d'automatisation industriel à l'aide des adresses du système d'automatisation superposées à un protocole de couches de commutation ou de sécurisation dépendant d'un réseau partiel, dans lequel, lors de l'acheminement des messages,
- on fait fonctionner et on relie ensemble des liaisons constituées par sauts, conformément à un protocole de couches de sécurisation subordonné hiérarchiquement,
- on prélève les adresses de station IPv4 (120a) respectives des appareils de communication reposant sur IPv6, directement de l'identifiant d'interface de l'adresse IPv6 local link respective.

2. Procédé suivant la revendication 1,
dans lequel un premier appareil de communication envoie, dans une demande à constituer une liaison avec un deuxième appareil de communication éloigné de plusieurs sauts, seulement l'adresse du système d'automatisation du deuxième appareil de communication à un premier routeur affecté au premier appareil de communication, dans lequel le premier routeur complète l'adresse de système d'automatisation du premier appareil de communication dans la demande, au moyen d'une adresse source de couche de sécurisation du premier appareil de communication, et l'achemine directement ou indirectement à un deuxième routeur affecté au deuxième appareil de communication, dans lequel le premier routeur détermine, pour un premier appareil de communication reposant sur IPv6, à l'aide de l'adresse source de couche de sécurisation du premier appareil de communication, l'adresse IPv6 local link du premier appareil de communication, et prend, à partir de son identifiant d'interface, l'adresse de station du premier appareil de communication, et dans lequel le premier routeur utilise, comme identifiant de réseau partiel pour l'adresse de système d'automatisation du premier appareil de communication, l'identifiant de réseau partiel de sa propre adresse de système d'automatisation.

3. Procédé suivant la revendication 2,
dans lequel on fixe, par réseau partiel du système d'automatisation industriel, les adresses de stations d'appareils de communication pour lesquelles des liaisons de couche de transport sont constituées sur la base d'IPv6.

4. Procédé suivant la revendication 3,
dans lequel on fixe les adresses de station d'appareils de communication pour lesquelles des liaisons de couche de transport sont constituées sur la base d'IPv6 au moyen d'un système d'établissement de projet du système d'automatisation industriel.

5. Procédé suivant l'une des revendications 1 à 4,
dans lequel les appareils de communication peuvent être identifiés à l'aide de leurs adresses de système d'automatisation par un système d'établissement de projet du système d'automatisation industriel.

6. Procédé suivant l'une des revendications 1 à 5,
dans lequel on fixe les adresses de station IPv4 des appareils de communication reposant sur IPv6 au moyen d'un système d'établissement de projet du système d'automatisation industriel.
